# EUROPÄISCHE PATENTSCHRIFT

(11) **EP 0 599 090 B1**
(45) Veröffentlichungstag und Bekanntmachung des Hinweises auf die Patenterteilung: **06.11.1996**
(21) Anmeldenummer: 93117665.5
(22) Anmeldetag: 02.11.1993
(51) Int. Cl.: B24B 55/05

(54) **Handgeführtes Elektrowerkzeug, insbesondere Winkelschleifmaschine**
Hand-operated electrical tool, especially an angle-grinding machine
Outil manuel électrique, en particulier meuleuse d'angle

(30) Priorität: 24.11.1992 DE 4239367
(43) Veröffentlichungstag der Anmeldung: 01.06.1994
(73) Patentinhaber: ROBERT BOSCH GMBH, 70442 Stuttgart (DE)
(72) Erfinder: Eicher, Bernhard, D-70794 Filderstadt (DE)

(56) Entgegenhaltungen:
- WO-A-88/03077
- WO-A-92/00834
- WO-A-92/19423
- DE-A- 2 657 663
- DE-A- 3 633 943

## Beschreibung

Die Erfindung geht aus von einem handgeführten Elektrowerkzeug, insbesondere Winkelschleifmaschine, der im Oberbegriff des Anspruchs 1 definierten Gattung.

Bei einem bekannten Winkelschleifer od.dgl. Elektrowerkzeug dieser Art (DE 36 33 943 A1) wird die Federrastung von einem am hinteren Teil des Spindelhalses angeordneten, sich über 90° Umfangswinkel erstreckenden Zahnteil und einen an dem Schutzhaubenkragen befestigten Federelement gebildet, dessen über das Kragenende hinausstehender Federschenkel in eine der Rastnuten im Zahnteil eingreift. Durch Drehen der Schutzhaube kann der Federschenkel von einer in die andere Rastnut überführt und dadurch die Schutzhaube in verschiedenen Relativlagen festgesetzt werden. Am Ende des Zahnteils läuft der Federschenkel gegen eine Erhöhung, über welche er mittels eines Werkzeugs zur Demontage der Schutzhaube hinweggehoben werden kann. Zur axialen Sicherung der Schutzhaube auf dem Spindelhals ist letzterer mit einer Umfangsnut versehen, die über wenigstens eine Abflachung ihrer frontseitigen Begrenzungswand axial zugänglich ist, während der Schutzhaubenkragen in seinem Innern einen mit dieser Abflachung korrespondierenden Steg trägt, der beim Aufschieben der Schutzhaube auf den Spindelhals über die Abflachung der Umfangsnut hinweggleitet und nach anschließender Relativdrehung zwischen Schutzhaube und Spindelhals, wobei der Federschenkel in eine der Rastnuten einfällt, die Begrenzungswand der Umfangsnut hintergreift. Diese bekannte Befestigung der Schutzhaube auf dem Spindelhals des Winkelschleifers ist konstruktiv sehr aufwendig und bedingt relativ hohe Fertigungskosten.

### Vorteile der Erfindung

Das erfindungsgemäße handgeführte Elektrowerkzeug mit den kennzeichnenden Merkmalen des Anspruchs 1 hat den Vorteil, daß die Verbindung zwischen Schutzhaube und Werkzeuggehäuse konstruktiv einfach und kostengünstig ist und für den Benutzer zeitsparend mit wenigen Handgriffen herstell- bzw. lösbar ist. Das Spannband ist mit nur geringem Kraftaufwand manuell zu spannen und fixiert die Schutzhaube durch formschlüssige Verriegelung der Rastnase an dem mindestens einen Federelement in den Rastnuten des Spindelhalses zuverlässig auf letzterem. Nach Lösen des Schnellspannverschlusses kann die Schutzhaube relativ zum Spindelhals verdreht werden, wobei die Rastnase in eine andere Rastnut einfällt und mit Schließen des Schnellspannverschlusses in dieser Rastnut formschlüssig festgesetzt wird. Bei einem unbeabsichtigten Öffnen des Spannverschlusses bleibt die Schutzhaube in der Rastung am Spindelhals positioniert.

Durch die in den weiteren Ansprüchen aufgeführten Maßnahmen sind vorteilhafte Weiterbildungen und Verbesserungen des im Anspruch 1 angegebenen handgeführten Elektrowerkzeugs möglich.

In einer vorteilhaften Ausführungsform der Erfindung geht die mindestens eine Aussparung vom freien Ende des Schutzhaubenkragens aus und erstreckt sich zusammen mit der einliegenden Federzunge über annähernd die gesamte axiale Länge des Schutzhaubenkragens. Der Rastnutenkranz ist nahe dem in Aufschieberichtung der Schutzhaube hinteren Ende des Spindelhalses und die Rastnase an der Federzunge nahe dem freien Ende des Schutzhaubenkragens plaziert. Dadurch erhält die Federzunge einen relativ großen Federhub, was die Überführung der Rastnase von Rastnut zu Rastnut beim Drehen der Schutzhaube auf dem Spindelhals erleichtert.

In einer bevorzugten Ausführungsform der Erfindung wird dabei die Federzunge unmittelbar aus dem Schutzhaubenkragen ausgestanzt. Dadurch kann sie in sehr einfacher und kostengünstiger Weise hergestellt werden. Aus gleichem Grund ist gemäß einer weiteren Ausführungsform der Erfindung die Rastnase aus der Federzunge ausgeprägt.

Werden gemäß einer bevorzugten Ausführungsform drei Federzungen mit Rastnasen vorgesehen, die in um Umfangswinkel gegeneinander versetzte Aussparungen angeordnet sind, so erhält man eine Dreipunktauflage der Schutzhaube auf dem Spannhals, was dämpfend auf die Schutzhaube wirkt.

Gemäß einer weiteren Ausführungsform der Erfindung ist der Schutzhaubenkragen in seinem von der Schutzhaube abgekehrten freien Ende mit mindestens einer radial überstehenden Bördelnase versehen. Diese Bördelnase verhindert das Abgleiten des Spannbandes von dem Schutzhaubenkragen, so daß diese auch nach Abziehen der Schutzhaube von dem Elektrowerkzeug unverlierbar an der Schutzhaube verbleibt.

### Zeichnung

Die Erfindung ist anhand eines in der Zeichnung dargestellten Ausführungsbeispiels in der nachfolgenden Beschreibung näher erläutert. Es zeigen:
- Fig. 1: einen gehäuseseitigen Lagerflansch mit daran vorstehendem Spindelhals eines Winkelschleifers und auf den Spindelhals aufgesetzte Schutzhaube in Seitenansicht und teilweise geschnitten,
- Fig. 2: eine Seitenansicht von Lagerflansch und Spindelhals der Winkelschleifmaschine,
- Fig. 3: einen Schnitt längs der Linie III-III in Fig. 2,
- Fig. 4: eine Draufsicht der Schutzhaube in Richtung Pfeil IV in Fig. 1,
- Fig. 5: eine Seitenansicht der Schutzhaube in Richtung Pfeil V in Fig. 4.

### Beschreibung des Ausführungsbeispiels

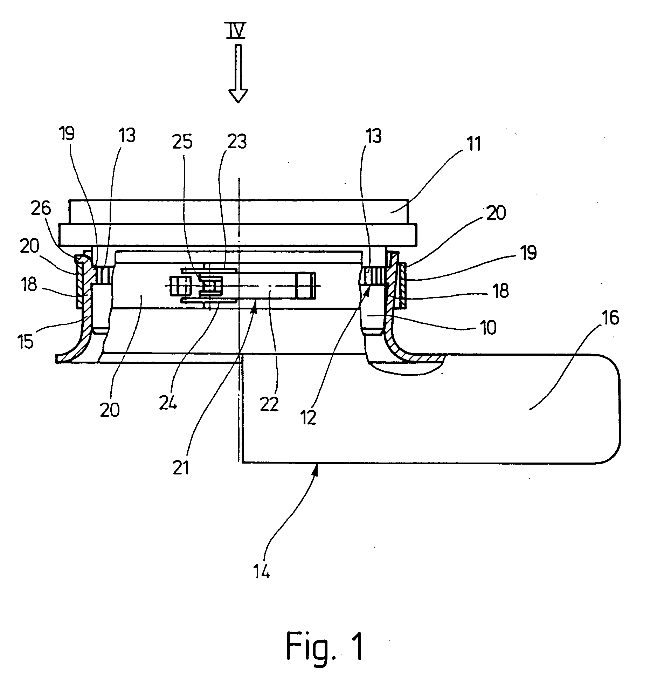

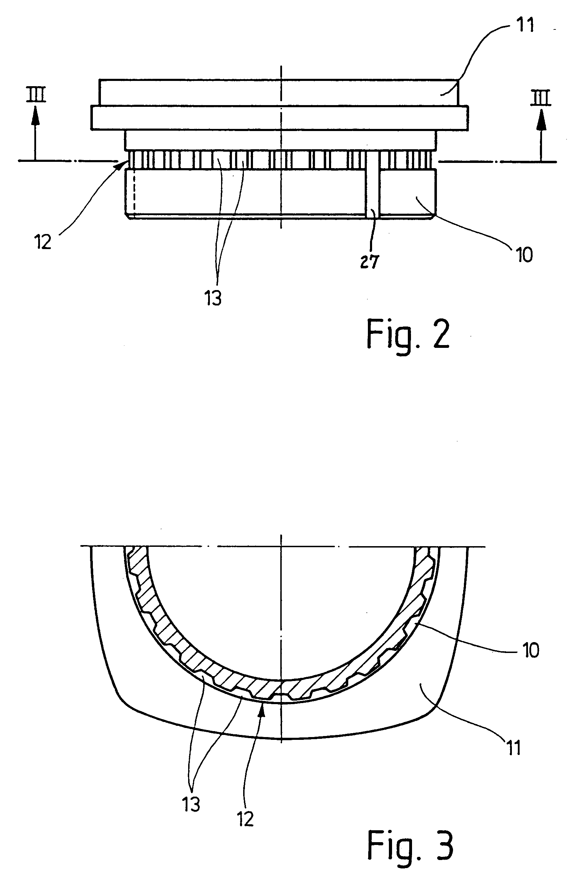

In Fig. 1 und 2 ist mit 10 der Spindelhals eines Winkelschleifers als Besipiel für ein allgemeines handgeführtes Elektrowerkzeug bezeichnet, der mit dem Lagerschild 11 für das vordere bzw. untere Lager für die Arbeitsspindel eine Baueinheit bildet. Der Lagerflansch 11 ist am nicht dargestellten Maschinengehäuse des Winkelschleifers ausgebildet. Der Spindelhals 10 trägt in seinem hinteren, nahe dem Lagerschild 11 liegenden Bereich einen umlaufenden geschlossenen Kranz mit einer Vielzahl von gleichartig ausgebildeten Rastnuten 13, die zum Befestigung einer Schutzhaube 14 auf dem Spindelhals 10 dienen.

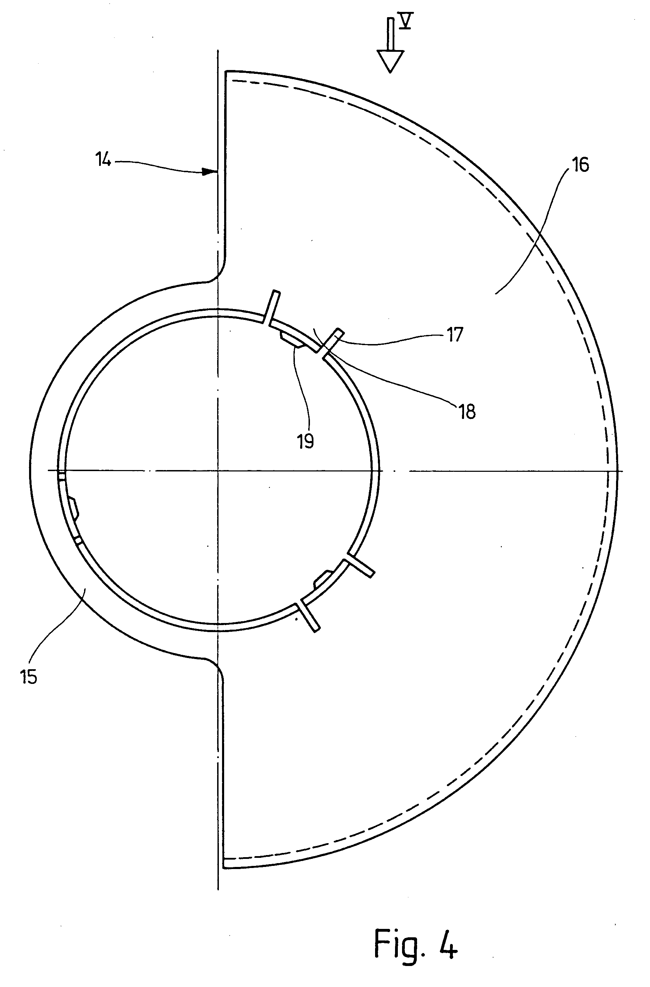

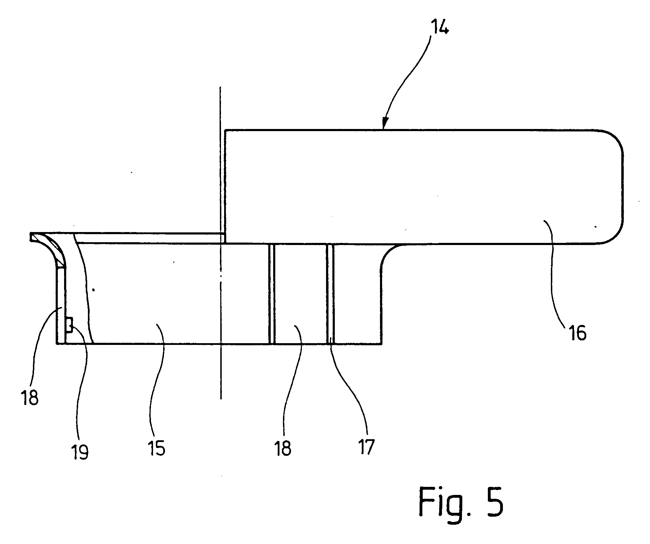

Wie aus Fig. 1, 4 und 5 ersichtlich ist, besitzt die Schutzhaube 14 einen kreisförmigen Kragen 15 und eine sich daran einstückig anschließende Abdeckfläche 16. Im Kragen 15 sind von dessen freier, von der Abdeckfläche 16 abgekehrten Stirnseite ausgehend in Axialrichtung Aussparungen 17 eingeschnitten, die sich über die gesamte axiale Länge des Kragens 15 erstrecken, und die Aussparungen 17 sind mit Federzungen 18 ausgefüllt, die nahe ihrem dem freien Ende des Kragens 15 zugekehrten Ende mit einer nach innen vorstehenden Rastnase 19 versehen sind. Von den Aussparungen 17 mit Federzungen 18 sind insgesamt drei am Umfang um gleiche Umfangswinkel versetzt angeordnet. Aussparungen 17 mit Federzungen 18 werden im vorliegenden Ausführungsbeispiel durch Ausstanzen der Federzungen 18 aus dem Material des Schutzhaubenkragens 15 realisiert, wobei die Rastnasen 19 von Ausprägungen gebildet werden, die aus den Federzungen 18 ausgedrückt werden. Die Federzungen 18 können aber auch als separate Federstahlelemente am Grunde des Kragens 15 oder am Grunde der Abdeckfläche 16 aufgenietet werden.

Wie aus Fig. 1 ersichtlich ist, ist auf dem Schutzhaubenkragen 15 ein Spannband 20 aufgelegt, das die Federzungen 18 im Bereich ihrer Rastnasen 19 umfaßt und mittels eines manuell zu betätigenden Schnellspannverschlusses 21 auf dem Kragen 15 festgespannt wird, wobei die Federzungen 18 so festgelegt werden, daß ihre Rastnasen 19 unaushebbar in den Rastnuten 13 eingreifen. Der Schnellspannverschluß 21 weist hierzu einen einarmigen Spannhebel 22 auf, der mit dem einen Spannbandende schwenkbeweglich verbunden ist. Zwei Schwenkbügel 23,24 sind jeweils endseitig einerseits im Abstand von der Schwenkachse 25 des Spannhebels 22 an gegenüberliegenden Schmalseiten des Spannhebels 22 und andererseits am anderen Spannbandende ebenfalls an gegenüberliegenden Schmalseiten des Spannbandes 20 angelenkt. Wird der Spannhebel 22 auf das Spannband 20 aufgeschwenkt, so wird dieses an den Schutzhaubenkragen 15 kraftschlüssig angelegt und die Schutzhaube 14 über die Rastnuten 13 und Rastnasen 19 formschlüssig auf dem Spindelhals 10 festgelegt, wie dies in Fig. 1 in der linken Schnitthälfte dargestellt ist. Wird der Spannhebel 22 vom Spannband 20 abgeschwenkt, wobei zu Beginn der Schwenkbewegung eine gewisse Rastkraft zu überwinden ist, so vergrößert sich etwas der Durchmesser des Spannbandes 20, wie dies in der rechten Schnitthälfte in Fig. 1 dargestellt ist. Den Federzungen 18 ist es nunmehr möglich, beim Drehen der Schutzhaube 14 zwecks Verstellung dieser auf den Spindelhals 10 über die Rastnasen 19 nach außen gedrückt zu werden, so daß die Rastnasen 19 an den Federzungen 18 aus der einen Rastnut 13 ausgehoben und in eine nachfolgende Rastnut 13 wieder einfallen können.

Wie auch in Fig. 1 in der linken Schnitthälfte dargestellt ist, sind am freien Ende des Kragens 15 Bördelnasen 26 angeordnet, die radial über den Umfang des Kragens 15 vorstehen. Durch diese Bördelnasen 26 kann das Spannband 20 bei von der Winkelschleifmaschine getrennter Schutzhaube 14 nicht von dem Kragen 15 abrutschen und ist somit unverlierbar an der Schutzhaube 14 festgelegt. Das Spannband 20 ist frei drehbar auf dem Kragen 15 angeordnet, kann aber auch in einer bestimmten Lage fixiert werden, so daß die Positionierung des Schnellspannverschlusses 21 in einer bestimmten Lage zum Spindelhals 10 möglich ist.

Wie aus Fig. 2 zu erkennen ist, sind auf dem Spindelhals 10 Axialnuten 27 angeordnet. Jeweils eine Axialnut 27 ist der Rastnase 19 einer Federzunge 18 zugeordnet, so daß hier insgesamt drei Axialnuten 27 über den Umfang um die gleichen Umfangswinkel versetzt vorgesehen sind, um die auch die Federzungen 18 zueinander versetzt sind. In diese Axialnuten 27 tauchen beim Aufschieben der Schutzhaube 14 auf den Spindelhals 10 die Rastnasen 19 an den Federzungen 18 ein und werden entlang dieser Axialnuten 27 in die Rastnuten 13 eingeschoben. Werden die Federzungen 18, und damit die Axialnuten 27, asymmetrisch verteilt angeordnet, so kann mit diesen Axialnuten 27 gleichzeitig eine Codierung für unterschiedliche Schutzhaubendurchmesser gewonnen werden.

## Patentansprüche

1. Handgeführtes Elektrowerkzeug, insbesondere Winkelschleifmaschine, mit einem Gehäuse mit daran ausgebildetem, zur Antriebsspindel koaxialen Spindelhals (10) und mit einer Schutzhaube (14), die mit einem ringförmigen Kragen (15) auf den Spindelhals (10) aufgeschoben und über eine Federrastung an diesem festgelegt ist, dadurch gekennzeichnet, daß die Federrastung einen am Spindelhals (10) umlaufenden, geschlossenen Kranz (12) mit einer Vielzahl von Rastnuten (13) und mindestens eine in einer Aussparung (17) im Schutzhaubenkragen (15) angeordnete, kragenfeste Federzunge (18) aufweist, die mit einer Rastnase (19) in eine der Rastnuten (13) eingreift, und daß der Schutzhaubenkragen (15) von einem die Federzunge (18), vorzugsweise im Bereich der Rastnase (19), überspannenden Spannband (20) mit manuellem Spannverschluß (21) umspannt ist.

2. Elektrowerkzeug nach Anspruch 1, dadurch gekennzeichnet, daß die mindestens eine Aussparung (17) vom freien Ende des Schutzhaubenkragens (15) ausgeht und sich zusammen mit der einliegenden Federzunge (18) über annähernd die gesamte Axiallänge des Schutzhaubenkragens (15) erstreckt.

3. Elektrowerkzeug nach Anspruch 1 oder 2, dadurch gekennzeichnet, daß der Rastnutenkranz (12) nahe dem in Aufschieberichtung der Schutzhaube (14) hinteren Ende des Spindelhalses (10) und die Rastnase (19) nahe dem freien Ende des Schutzhaubenkragens (15) plaziert ist.

4. Elektrowerkzeug nach einem der Ansprüche 1 - 3, dadurch gekennzeichnet, daß die Federzunge (18) aus dem Schutzhaubenkragen (15) freigeschnitten ist.

5. Elektrowerkzeug nach einem der Ansprüche 1 - 3, dadurch gekennzeichnet, daß die Federzunge an der Schutzhaube (14) befestigt, vorzugsweise angenietet, ist.

6. Elektrowerkzeug nach einem der Ansprüche 1 - 5, dadurch gekennzeichnet, daß die Rastnase (19) von einer Ausprägung in der Federzunge (18) gebildet ist.

7. Elektrowerkzeug nach einem der Ansprüche 1 - 6, dadurch gekennzeichnet, daß der Schutzhaubenkragen (15) an seinem freien Ende mindestens eine radial überstehende Bördelnase (26) trägt.

8. Elektrowerkzeug nach einem der Ansprüche 1 - 7, dadurch gekennzeichnet, daß der Spannverschluß (21) einen einarmigen Spannhebel (22), der mit dem einen Spannbandende schwenkbeweglich verbunden ist und zwei Schwenkbügel (23,24) aufweist, die jeweils endseitig einerseits im Abstand von der Schwenkachse (25) des Spannhebels (22) an gegenüberliegenden Schmalseiten des Spannhebels (22) und andererseits am anderen Spannbandende an gegenüberliegenden Schmalseiten des Spannbandes (20) angelenkt sind.

9. Elektrowerkzeug nach einem der Ansprüche 1 - 8, dadurch gekennzeichnet, daß insgesamt drei Federzungen (18) mit Rastnasen (19) vorgesehen sind, die in um Umfangswinkel gegeneinander versetzte Aussparungen (17) angeordnet sind.

10. Elektrowerkzeug nach Anspruch 9, dadurch gekennzeichnet, daß die Aussparungen (17) mit Federzungen (18) asymmetrisch über den Kragenumfang verteilt angeordnet sind.

11. Elektrowerkzeug nach Anspruch 9 oder 10, dadurch gekennzeichnet, daß auf dem Spindelhals (10) den Federzungen (18) zugeordnete Axialnuten (27) angeordnet sind, in welchen die Rastnasen (19) an den Federzungen (18) beim Aufschieben der Schutzhaube (14) auf den Spindelhals (10) geführt werden.

## Claims

1. Hand-operated electric tool, in particular angle-grinding machine, comprising a housing, having a spindle neck (10) formed thereon and coaxial to the drive spindle, and having a protective hood (14) which is pushed with an annular collar (15) onto the spindle neck (10) and is secured to the latter via a spring catch, characterized in that the spring catch has a closed rim (12), encircling the spindle neck (10) and having a multiplicity of catch grooves (13), and at least one spring tongue (18) which is arranged in a recess (17) in the protective-hood collar (15), is fixed to the collar, and engages in one of the catch grooves (13) by means of a catch lobe (19), and in that the protective-hood collar (15) is clasped by a tension band (20) which stretches over the spring tongue (18), preferably in the area of the catch lobe (19), and has a manual tension lock (21).

2. Electric tool according to Claim 1, characterized in that the at least one recess (17) starts from the free end of the protective-hood collar (15) and extends together with the spring tongue (18) lying therein over approximately the entire axial length of the protective-hood collar (15).

3. Electric tool according to Claim 1 or 2, characterized in that the catch-groove rim (12) is placed close to the rear end of the spindle neck (10) in the push-on direction of the protective hood (14), and the catch lobe (19) is placed close to the free end of the protective-hood collar (15).

4. Electric tool according to one of Claims 1 to 3, characterized in that the spring tongue (18) is cut free from the protective-hood collar (15).

5. Electric tool according to one of Claims 1 to 3, characterized in that the spring tongue is fastened, preferably riveted, to the protective hood (14).

6. Electric tool according to one of Claims 1 to 5, characterized in that the catch lobe (19) is formed by an embossment in the spring tongue (18).

7. Electric tool according to one of Claims 1 to 6, characterized in that the protective-hood collar (15) has at least one radially projecting flange lobe (26) at its free end.

8. Electric tool according to one of Claims 1 to 7, characterized in that the tension lock (21) has a one-armed tension lever (22), which is pivotably connected to the one tension-band end, and two swivelling brackets (23, 24) which in each case are linked at the ends on the one side at a distance from the pivot axis (25) of the tension lever (22) to opposite narrow sides of the tension lever (22) and on the other side at the other tension-band end to opposite narrow sides of the tension band (20).

9. Electric tool according to one of Claims 1 to 8, characterized in that a total of three spring tongues (18) having catch lobes (19) are provided which are arranged in recesses (17) offset from one another by circumferential angles.

10. Electric tool according to Claim 9, characterized in that the recesses (17) having spring tongues (18) are arranged distributed asymmetrically over the collar periphery.

11. Electric tool according to Claim 9 or 10, characterized in that axial grooves (27) allocated to the spring tongues (18) are arranged on the spindle neck (10), in which axial grooves (17) the catch lobes (19) on the spring tongues (18) are guided when pushing the protective hood (14) onto the spindle neck (10).

## Revendications

1. Outil électrique à main, notamment meuleuse d'angle, comprenant un boîtier muni d'un col de broche (10), coaxial à la broche d'entraînement, et un capot protecteur (14) dont le col annulaire (15) est emmanché sur le col de broche (10) et y est fixé par un moyen d'accrochage à ressort,
caractérisé en ce que
le moyen d'accrochage à ressort comprend une couronne (12) entourant le col de broche (10), avec un grand nombre de rainures d'accrochage (13) et au moins une languette élastique (18) solidaire du col et venant dans une cavité (17) du col (15) du capot protecteur, la languette élastique (18) venant prendre par un bec d'accrochage (19) dans l'une des rainures d'accrochage (13), et le col (15) du capot protecteur est entouré par un collier de serrage (20) équipé d'un moyen de serrage manuel (21), ce collier passant par-dessus la languette élastique (18) de préférence au niveau du bec d'accrochage (19).

2. Outil électrique selon la revendication 1,
caractérisé en ce qu'
au moins une cavité (17) part de l'extrémité libre du col (15) du capot protecteur et s'étend, avec la languette élastique (18) qui s'y loge, sur pratiquement toute la longueur axiale du col (15) du capot protecteur.

3. Outil électrique selon la revendication 1 ou 2,
caractérisé en ce que
la couronne de rainure d'accrochage (12) est placée au voisinage de l'extrémité arrière du col de broche (10) selon le sens d'emmanchement du capot protecteur (14), et le bec d'accrochage (19) est prévu à proximité de l'extrémité libre du col (15) du capot protecteur.

4. Outil électrique selon l'une des revendications 1 à 3,
caractérisé en ce que
la languette élastique (18) est dégagée dans le col (15) du capot protecteur.

5. Outil électrique selon l'une des revendications 1 à 3,
caractérisé en ce que
la languette élastique est fixée de préférence par rivetage au capot protecteur (14).

6. Outil électrique selon l'une quelconque des revendications 1 à 5,
caractérisé en ce que
le bec d'accrochage (19) est formé par une partie estampée de la languette à ressort (18).

7. Outil électrique selon l'une des revendications 1 à 6,
caractérisé en ce que
le col (15) du capot protecteur porte à son extrémité libre, au moins un bec rabattu (26) radialement en saillie.

8. Outil électrique selon l'une quelconque des revendications 1 à 7,
caractérisé en ce que
le moyen de serrage (21) comprend un levier à un bras (22) relié de manière pivotante à une extrémité du collier de serrage et deux étriers pivotants (23, 24) articulés chaque fois par une extrémité à une certaine distance de l'axe de pivotement (25) du levier de serrage (22) sur les petits côtés opposés du levier de serrage (22) et, d'autre part, à l'autre extrémité du collier, sur deux petits côtés opposés du collier de serrage (20).

9. Outil électrique selon l'une des revendications 1 à 8,
caractérisé en ce que
l'on a en tout trois languettes élastiques (18) avec des becs d'accrochage (19) qui sont logés dans des découpes (17) décalées d'un angle périphérique, les unes par rapport aux autres.

10. Outil électrique selon la revendication 9,
caractérisé en ce que les découpes (17) et les languettes élastiques (18) sont réparties d'une manière non symétrique à la périphérie du col.

11. Outil électrique selon la revendication 9 ou 10,
caractérisé en ce que
le col de broche (10) comporte des rainures axiales (27) associées aux languettes élastiques (18) dans lesquelles sont guidés les becs d'accrochage (19) portés par les languettes élastiques (18) lorsqu'on emmanche le capot protecteur (14) sur le col de broche (10).
